# EUROPEAN PATENT APPLICATION

(11) **EP 2 549 660 A1**
(43) Date of publication of application: **23.01.2013**
(21) Application number: 12175379.2
(22) Date of filing: 06.07.2012
(51) Int. Cl.: H04B 1/38

(54) **Dual carrying and usage unit for handheld devices**

(30) Priority: 06.07.2011 TR 201106723 U
(71) Applicant: Aselsan Elektronik Sanayi ve Ticaret Anonim Sirketi, 06370 Ankara (TR)
(72) Inventor: Savas, Fuat M., 06370 Ankara (TR); Yazici, Ali, 06370 Ankara (TR); Yetkin, Mehmet, 06370 Ankara (TR); Akkus, Yigit, 06370 Ankara (TR)
(74) Representative: Dericioglu, Ekin

(57) **Abstract**

The present invention relates to a dual carrying and usage unit; which is used for carrying handheld devices that connect to each other and perform common functions; and which comprises an elastic body having a single space so as to carry at least two devices; a fastening strap; interface opening which allows to access the interfaces of both devices and to use the devices when they are inside the usage unit; a cable chamber in which the inter-device and/or outer cables are connected to the devices and which prevents the cables and the connections of the cables with the devices from getting damaged by external factors such as falling and hitting; a cable opening which is located at the cable chamber and which enable to connect/disconnect the inter-device and/or outer cable connections within the usage unit and to access the cables.

## Description

### Field of the Invention

The present invention relates to dual carrying and use of communication devices such as handheld satellite phones, cellular phones and crypto units which connect to each other and perform common functions.

### Background of the Invention

When carrying devices such as handheld satellite phones and cellular phones which connect to each other and perform common functions; if each device is carried in a separate case, data carrying elements such as cables which provide communication between the devices may get broken and/or torn depending on the positions of the devices. In addition to that, due to the fact that each device has a separate case, the cable may impede movements of the user along the distance between the devices. When using the two devices concurrently, ergonomic problems can be experienced when holding the two devices with a single hand or accessing the interface while holding the devices in separate hands. Furthermore, cable connectors may break in case of external factors such as falling and hitting experienced when the communication cables of the devices are connected, due to the fact that the cases do not protect the cable connectors.

In the currently employed technique, protection and/or carrying units are designed for a single device. Similar known applications for carrying and protecting two mobile devices at the same time are carrying cases with zippers and pockets. Even if there are dual mobile device usage units, user interfaces of the devices are not accessible and usable from outside in those applications.

The United States patent document no. US2007205121, an application in the state of the art, discloses a carrying case for mobile phones. This protective case enables devices such as satellite and mobile phones, which are connected to each other, to be carried in conjunction. The invention has the same length with mobile devices and is lightweight and portable. It protects the devices against factors such as shocks, water and dust. Additionally, the case allows monitoring in closed or open position and enables compliance of device protrusions such as antennas with the case by means of the openings it has. Although the document mentions a case in which the entire mobile device and the related equipment can be carried and which is not affected by environmental conditions, size of the case due to its structure and the equipment it contains is not suitable for use with a single hand.

The United States patent document no. US2004166910, an application in the state of the art, discloses a mobile device case which comprises a single space having corrugated protrusions. These protrusions ensure that the mobile device completely fits into the case and prevents it from falling down.

The International patent document no. W00051315, an application in the state of the art, discloses a mobile device case. This case has an elastic opening. The mobile device which is placed into a hard case can be used through these openings without being taken out of the case and additionally the openings provide communication thereof with outer cables, however a solution for communication cables between two devices is not disclosed.

In the state of the art, mobile devices are not protected against falling down but against environmental factors. Furthermore, while a solution is advised for dual carrying, a solution for dual use is not provided.

### Summary of the Invention

The objective of the present invention is to reduce the risk of breaking/tearing of the cables of mobile devices carried at a fixed position relative to each other. Another objective of the present invention is to ensure that the user is not impeded by a cable that goes out of the protective dual carrying and usage unit during use of the mobile devices which are within the same protective case.

Another objective of the present invention is to realize use of communication members excluding cables for mobile devices within the usage unit.

A further objective of the present invention is to prevent vulnerability that might occur in wireless communication by screening the communication cables in terms of confidentiality.

### Detailed Description of the Invention

"Dual carrying and usage unit for handheld devices" developed to fulfill the objective of the present invention is illustrated in the accompanying figures wherein,
Figure 1 is the perspective view of the present invention.
Figure 2 is the perspective view of the present invention when it includes two devices.
Figure 3 is another perspective view of the present invention when it includes two devices.
Figure 4 is the top perspective view of the present invention.

The components shown in the figures are each given reference numerals as follows:
1. Dual carrying and usage unit
2. Body
3. Fastening strap
4. 4.1. Interface opening
5. Cable chamber
   5.1. Cable opening
6. Clip
7. Belt clip
8. Shoulder strap
9. 9.1. Hook
   C. Device
   D. Outer cable
   I. Inner cable

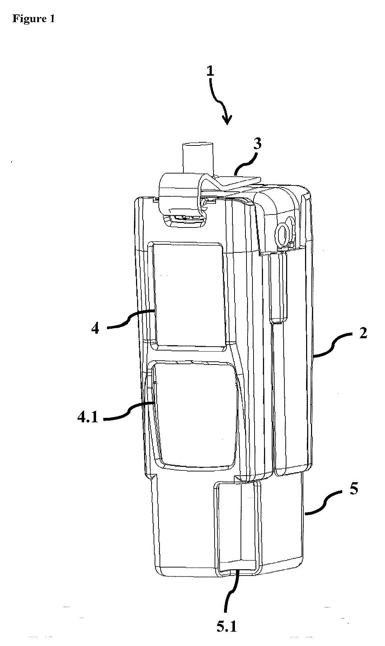

A dual carrying and usage unit (1), which is used for carrying handheld devices (C) that connect to each other and perform common functions, comprises
a t least one elastic body (2) having a single space so as to carry at least two devices (C),
a t least one fastening strap (3) which enables to fix both of the devices (C) within the usage unit and prevents them from slipping out of the usage unit,
a t least two interface openings (4, 4.1) on the elastic body (2) allowing to access the interfaces of both devices (C) at the same time and to use the devices (C) concurrently when they are within the usage unit,
a t least one cable chamber (5), in which the inter-device (I) and/or outer (D) cables are connected to the devices when the devices (C) are within the usage unit, and which prevents the cables (D, I) and the connections of the cables (D, I) with the devices (C) from getting damaged by external factors such as falling and hitting,
a t least two cable openings (5.1), which are located at the cable chamber, and which enable to connect/disconnect the inter-device (I) and/or outer (D) cable connections within the usage unit and to access the cables (D, I) (Figure 1, Figure 2, Figure 3).

In the preferred embodiment of the invention, the elastic body (2) allows the devices (C) to be carried in the same usage unit and by a single hand. The elastic body (2) is comprised of a single space with corrugations for both devices (C) that receive the specific surfaces of the devices. The elastic body (2) fixes both of the devices within a single space by means of its corrugations specific to the devices (C). The devices (C) are placed into the elastic body (2) such that rear surfaces of both of the devices (C) abut each other.

Since the elastic body (2) comprises a single space, the devices are enabled to be connected outside and then placed inside the dual carrying and usage unit (1). The elastic body (2) also protects the devices against external factors by means of its hard structure.

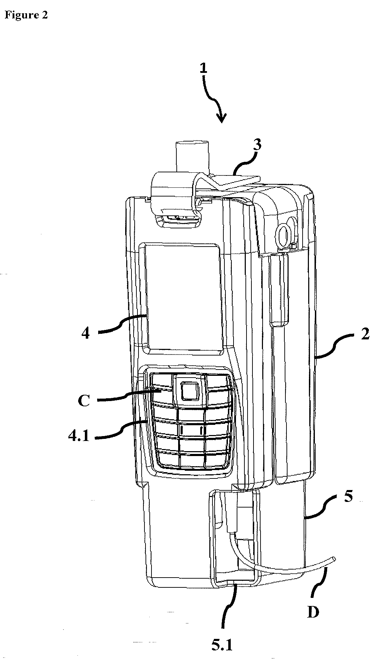

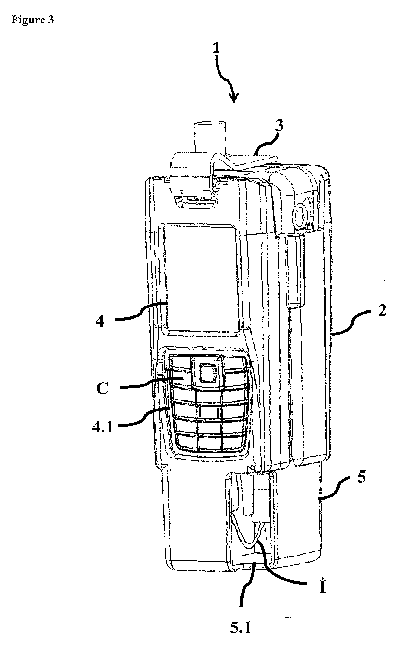

There are interface openings (4) on the elastic body (2) which comply with the elements specific to the devices such as screen, keypad, microphone and speaker. The interface openings (4) enable access to the interfaces of both devices (C) and concurrent use of both devices (C) when they are inside the dual carrying and usage unit (1) (Figure 2, Figure 3).

The part on the elastic body (2) where the cables (D, I) are connected to the devices when the two devices (C) are inside the dual carrying and usage unit (1), is the cable chamber (5). The cable chamber (5) ensures that the connection cables (I) between the devices (C) do not impede the user movements since the devices (C) are within the same usage unit. The cable chamber (5) protects data carrying elements such as cables (I) providing communication between devices against breaking and/or tearing that occur depending on the positions of the devices (C) (Figure 2, Figure 3).

There are cable openings (5.1) in the cable chamber. The cable openings (5.1) allow access to the cable connection/disconnection areas of the devices for connection/disconnection procedures of the inter-device (I) and/or outer connection (D) cables when the devices (C) are inside the dual carrying and usage unit (1). In the preferred embodiment of the invention, the cable openings (5.1) are located at the corners of the cable chamber (5) (Figure 2, Figure 3).

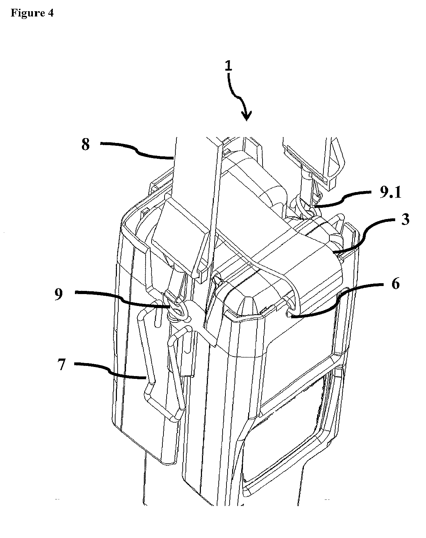

The fastening strap (3) enables both of the devices (C) to be fixed within the dual carrying and usage unit (1), At the upper part of the body (2), both ends of the fastening strap (3) that fixes the devices is attached to the clip (6) and thereby the devices are fixed within the dual usage unit. The fastening strap (3) is fixed to the elastic body (2) from one end thereof and can be adjusted on the other end by means of a closure (fermeture) band. Since it is stretched from bottom to the top at the end that it is fixed, it enables use of a uniform dual carrying and usage unit (I) for different sizes of devices having different widths and depths (Figure 4).

In the preferred embodiment of the invention, there is provided at least one belt clip (7) which is attached on the body (2) and which enables the dual carrying and usage unit (1) to be carried by being fixed to the user's body (Figure 4).

In another preferred embodiment of the invention, there is at least one shoulder strap (8) attached to the body (2). The carrying and usage unit (1) can be carried on the shoulder by connecting or attaching the shoulder straps (8) to the hooks (9, 9.1) provided on the elastic body (2) (Figure 4).

Within the framework of these basic concepts, it is possible to develop a wide variety of embodiments of the inventive dual carrying and usage unit for handheld devices (1). The invention can not be limited to the examples described herein and it is essentially according to the claims.

## Claims

1. A dual carrying and usage unit (1), which is used for carrying handheld devices (C) that connect to each other and perform common functions, **comprising**
- at least one elastic body (2) having a single space so as to carry at least two devices,
- at least one fastening strap (3) which enables to fix both of the devices (C) within the usage unit and prevents them from slipping out of the usage unit,
**characterized by**
- at least two interface openings (4, 4.1) on the elastic body (2) allowing to access the interfaces of both devices (C) at the same time and to use the devices concurrently when they are within the usage unit,
- at least one cable chamber (5), in which the inter-device (I) and/or outer (D) cables are connected to the devices when the devices (C) are within the usage unit, and which prevents the cables (D, I) and the connections of the cables (D, I) with the devices (C) from getting damaged by external factors such as falling and hitting,
- at least two cable openings (5.1), which are located at the cable chamber, and which enable to connect/disconnect the inter-device (I) and/or outer (D) cable connections within the usage unit and to access the cables (D, I).

2. A dual carrying and usage unit (1) according to Claim 1, **characterized by** the elastic body (2) which allows the devices to be carried inside the same usage unit and by a single hand.

3. A dual carrying and usage unit (1) according to any one of Claim 1 or Claim 2, **characterized by** the elastic body (2) which comprises a single space having corrugations for both devices (C) that receive the specific surfaces of the devices.

4. A dual carrying and usage unit (1) according to any one of the preceding claims, **characterized by** the elastic body (2) which fixes two devices within a single space by means of corrugations specific to devices (C).

5. A dual carrying and usage unit (I) according to any one of the preceding claims, **characterized by** the elastic body (2) into which the devices (C) are placed such that rear surfaces of both of the devices (C) abut each other.

6. A dual carrying and usage unit (1) according to any one of the preceding claims, **characterized by** the elastic body (2) which enables the devices to be connected outside and then placed inside the dual carrying and usage unit (1) by means of the fact that it comprises a single space.

7. A dual carrying and usage unit (1) according to any one of the preceding claims, **characterized by** the elastic body (2) which protects the devices against external factors by means of its hard structure.

8. A dual carrying and usage unit (1) according to any one of the preceding claims, **characterized by** the interface opening (4) which is provided on the elastic body (2) and which complies with the elements specific to the devices such as screen, keypad, microphone and speaker.

9. A dual carrying and usage unit (1) according to any one of the preceding claims, **characterized by** the interface openings (4) which enable access to the interfaces of both devices (C) and concurrent use of both devices (C) when they are inside the dual carrying and usage unit (1).

10. A dual carrying and usage unit (1) according to any one of the preceding claims, **characterized by** the cable chamber (5) which forms the part on the elastic body (2) where the cables (D, I) are connected to the devices when the two devices (C) are inside the dual carrying and usage unit (1).

11. A dual carrying and usage unit (1) according to any one of the preceding claims, **characterized by** the cable chamber (5) which ensures that the connection cables (I) between the devices (C) do not impede the user movements since the devices (C) are within the same usage unit.

12. A dual carrying and usage unit (1) according to any one of the preceding claims, **characterized by** the cable chamber (5) which protects data carrying elements such as cables (I) providing communication between devices (C) against breaking and/or tearing that occur depending on the positions of the devices.

13. A dual carrying and usage unit (1) according to any one of the preceding claims, **characterized by** the cable openings (5.1) which allow access to the cable connection/disconnection areas of the devices for connection/disconnection procedures of the inter-device cables (I) and/or outer connection cables (D) when the devices (C) are inside the dual carrying and usage unit (1).

14. A dual carrying and usage unit (1) according to any one of the preceding claims, **characterized by** the cable openings (5.1) which are located at the corners of the cable chamber (5).

15. A dual carrying and usage unit (I) according to any one of the preceding claims, **characterized by** at least one fastening strap (3) which enables both of the devices (C) to be fixed within the dual carrying and usage unit (1).

16. A dual carrying and usage unit (1) according to any one of the preceding claims, **characterized by** the clip (6) provided on the upper part of the body (2) which clip is attached to both ends of the fastening strap (3) that fixes the devices and thereby enables the devices to be fixed within the dual usage unit.

17. A dual carrying and usage unit (1) according to any one of the preceding claims, **characterized by** the fastening strap (3) which is fixed to the elastic body (2) from one end thereof and can be adjusted on the other end by means of a closure (fermeture) band.

18. A dual carrying and usage unit (1) according to any one of the preceding claims, **characterized by** the fastening strap (3) which enables use of a uniform dual carrying and usage unit (1) for different sizes of devices having different widths and depths since it is stretched from bottom to the top at the end thereof that it is fixed.

19. A dual carrying and usage unit (1) according to any one of the preceding claims, **characterized by** at least one belt clip (7) which is attached on the body (2) and which enables the dual carrying and usage unit (1) to be carried by being fixed to the user's body.

20. A dual carrying and usage unit (1) according to any one of the preceding claims, **characterized by** at least one shoulder strap (8) which is attached on the body (2) and which enables the dual carrying and usage unit (1) to be carried on the shoulder.

21. A dual carrying and usage unit (1) according to any one of the preceding claims, **characterized by** at least one hook (9, 9.1) which is provided on the body (2) and to which the shoulder strap (8) is connected or attached.
